# EUROPÄISCHE PATENTSCHRIFT

(11) **EP 4 626 767 B1**
(45) Veröffentlichungstag und Bekanntmachung des Hinweises auf die Patenterteilung: **01.07.2026**
(21) Anmeldenummer: 23817426.2
(22) Anmeldetag: 01.12.2023
(51) Int. Cl.: B61D 19/00, B60J 5/04, B60J 5/06, E05D 15/10

(54) **TEILBARES TÜRFLÜGELSEGMENT**
DIVISIBLE DOOR LEAF SEGMENT
SEGMENT DE BATTANT DE PORTE DIVISIBLE

(30) Priorität: 02.12.2022 DE 202022106758 U
(43) Veröffentlichungstag der Anmeldung: 08.10.2025
(73) Patentinhaber: Bode - Die Tür GmbH, 34123 Kassel (DE)
(72) Erfinder: LINNENKOHL, Lars, 34355 Staufenberg (DE)
(74) Vertreter: Patentanwälte Bauer Vorberg Kayser
(86) Internationale Anmeldenummer: PCT/EP2023/083982
(87) Internationale Veröffentlichungsnummer: WO 2024/115762

(56) Entgegenhaltungen:
- EP-B1- 3 342 609
- EP-B1- 3 666 619
- CN-U- 216 467 795
- DE-A1- 102013 200 071

## Beschreibung

Die vorliegende Erfindung betrifft eine Fahrzeugtürvorrichtung mit einem Türflügel zum Verschließen einer Türöffnung eines Fahrzeugs, insbesondere eine Fahrgasttür für ein Fahrzeug des öffentlichen Personenverkehrs.

Eine solche Fahrzeugtürvorrichtung findet sich ganz allgemein an Fahrzeugen und speziell an Fahrzeugen des öffentlichen Personenverkehrs wie z. B. Straßenbahnen, U-Bahnen, Regionalbahnen usw. Es handelt sich dabei speziell um Fahrzeugtüren, welche einen Ein- und Ausstieg von Fahrgästen des Fahrzeugs ermöglichen.

Derartige Fahrzeugtürvorrichtungen sind als Schwenk- oder Schwenkschiebetürsysteme ausgeführt, umfassend einen Türflügel, der von einer geschlossenen Stellung hin zu einer geöffneten Stellung unter Ausführung einer Türflügel-Bewegung bewegbar ist und umgekehrt. Der Türflügel wird bei Ausführung der Türflügelbewegung in Fahrzeugquerrichtung und in Fahrzeuglängsrichtung, also parallel zur Fahrzeugaußenwand, bewegt. Er befindet sich in der Geschlossenstellung in der Türöffnung und verschließt diese. In der Offenstellung ist der Türflügel in einer X-Richtung (entspricht der Fahrzeuglängsrichtung) parallel neben der Türöffnung und in einer Y-Richtung (entspricht der Fahrzeugquerrichtung) beabstandet zu einer Fahrzeugaußenwand des Fahrzeugs angeordnet.

Die Druckschrift EP 3 342 609 B1 beschreibt eine Fahrzeugtür, die aus zwei Türblättern gebildet ist. In der offenen Position der Tür ist das untere zweite Türblatt derart nach oben umgeklappt und platziert, dass es komplett über dem ersten oberen Türblatt liegt.

Eine grundsätzliche Anforderung an derartige Türsysteme besteht darin, dass der Türflügel auch in der Offenstellung möglichst wenig über die Außenabmessungen des Fahrzeugs, die sogenannte Hüllkurve vorstehen soll. Insbesondere bei Fahrzeugen des Schienenverkehrs sind räumliche Gegebenheiten in Bahnhöfen oder an Bahnsteigen wesentliche Einflussgrößen für die Gestaltung der Fahrzeuge und der Türvorrichtungen. In manchen Bahnhöfen oder an manchen Bahnsteigen beschränken die räumlichen Gegebenheiten vor Ort die maximal mögliche Fahrzeugbreite eines Fahrzeugs erheblich.

Die Aufgabe der Erfindung besteht darin, eine Fahrzeugtürvorrichtung zu schaffen, die es ermöglicht, dass das Fahrzeug auch für das Befahren von räumlich beschränkten Örtlichkeiten, insbesondere Bahnhöfe oder Bahnsteigbereiche, geeignet ist. Die Fahrzeugtürvorrichtung soll eine Alternative zu bereits bekannten Fahrzeugtürvorrichtungen darstellen und insbesondere die Einsatzmöglichkeiten der mit solchen Fahrzeugtürvorrichtungen ausgerüsteten Fahrzeugen erhöhen.

Die Erfindung wird durch eine Fahrzeugtürvorrichtung mit den Merkmalen des unabhängigen Patentanspruchs 1 gelöst.

Demnach weist die Fahrzeugtürvorrichtung einen Türflügel zum Verschließen einer Türöffnung eines Fahrzeugs auf, der aus einem oberen Türflügelsegment und einem unteren Türflügelsegment gebildet ist, welche
- in einer Geschlossenstellung die Türöffnung gemeinsam verschließen,
- in einer Offenstellung in einer Fahrzeuglängsrichtung parallel neben der Türöffnung und in einer Fahrzeugquerrichtung beabstandet zu einer Fahrzeugaußenwand angeordnet sind,
- in der Offenstellung in Bezug auf ihre Haupterstreckungsflächen in der Fahrzeugquerrichtung versetzt zueinander angeordnet sind,
wobei in der Offenstellung das untere Türflügelsegment (28) weniger von der Fahrzeugaußenwand (24) beabstandet ist als das obere Türflügelsegment (30).

Der Türflügel der erfindungsgemäßen Fahrzeugtürvorrichtung ist zweigeteilt ausgeführt, er weist ein oberes und ein unteres Türflügelsegment auf. Eines der beiden Türflügelsegmente der erfindungsgemäßen Fahrzeugtürvorrichtung steht in der Offenstellung weniger gegenüber der Fahrzeugaußenwand vor, der Abstand dieses Türflügelsegments zur Fahrzeugaußenwand ist also geringer als der Abstand des anderen Türflügelsegments. Der Begriff Türflügel meint im Sinne der Erfindung auch eine einzige Tür zum Verschließen einer Türöffnung.

Erfindungsgemäß ist das untere Türflügelsegment derart angeordnet und ausgeführt, dass es in der Offenstellung näher an der Fahrzeugaußenwand des Fahrzeugs verbleibt. Dies hat den Vorteil, dass nur ein geringerer Abstand der Fahrzeugaußenwand zu Bahnsteigen notwendig ist, bei beengten örtlichen Gegebenheiten kann dies einen wesentlichen Unterschied ausmachen. Während dann das obere Türflügelsegment möglicherweise über den Bahnsteig ragt, wird das untere Türflügelsegment zwischen der Fahrzeugaußenwand und dem Bahnsteig bewegt und gehalten.

Vorzugsweise weist also das obere Türflügelsegment einen größeren Hub (Bewegung in Fahrzeugquerrichtung) als das untere Türflügelsegment auf. In einer bevorzugten Ausführungsvariante beträgt der Hub des oberen Türflügelsegments etwa 60 bis 80 mm, vorzugsweise etwa 70 bis 75 mm und der Hub des unteren Türflügelsegments nur etwa 30 bis 50, vorzugsweise 35 bis 40 mm.

Das obere Türflügelsegment kann in einer bevorzugten Ausführungsvariante über einen oberen Schwenkarm und das untere Türflügelsegment über einen unteren Schwenkarm bewegt und gesteuert werden. Bevorzugt sind die beiden Türflügelsegmente gelenkig miteinander verbunden, beispielsweise über ein Parallelogramm.

Die beiden Türflügelsegmente sind vorzugsweise über ein Dichtungselement in der Geschlossenstellung gegeneinander abgedichtet. Eine Ballondichtung, die entlang von Kontaktflächen zwischen den beiden Türflügelsegmenten verläuft, hat sich als vorteilhaft erwiesen.

Die beiden Türflügelsegmente sind weiterhin vorzugsweise über ein weiteres Dichtungselement gegenüber einem Fahrzeugtürrahmen in der Geschlossenstellung abgedichtet.

Der untere Schwenkarm, der das untere Türflügelsegment bewegt, ist derart angeordnet und ausgeführt, dass dieser die Hubbewegung des unteren Türflügelsegments in Querrichtung des Fahrzeugs entsprechend begrenzt.

Zumindest der untere Schwenkarm kann vorzugsweise einen Aktuator aufweisen, der die Hubbewegung steuert. Über den Aktuator kann das untere Türflügelsegment je nach örtlichen Gegebenheiten unterschiedlich weit ausgefahren werden. Der Aktuator kann beispielsweise durch einen Kolbenantrieb gebildet sein, wobei die Hubbewegung durch die Ausfahrweite des Kolbens bestimmt wird.

In einer weiteren vorteilhaften Ausführungsvariante ermöglicht auch der obere Schwenkarm eine entsprechende Variation der Hubbewegung, so dass auch das obere Türflügelsegment unterschiedlich weit ausgefahren werden kann.

Vorteilhafterweise ist die Verbindung zwischen den beiden Türflügelsegmenten derart ausgebildet, dass diese schräg zueinander gestellt bzw. bewegt werden können. Wird beispielsweise das Türblatt während der Schwenkbewegung beim Öffnen oder Schließen schräg zur Außenwand des Fahrzeugs gestellt, erlaubt es die Verbindung der beiden Türflügelsegmente, dass das untere Türflügelsegment der Schrägstellung dann nicht oder nur zum Teil folgt und enger zur Außenwand ausgerichtet bleibt. Verbindungselemente zwischen den beiden Türflügelsegmenten weisen entsprechende Freiheitsgrade in der Bewegung auf.

Die Verbindung zwischen den beiden Türflügelsegmenten erfolgt vorzugsweise durch mindestens ein Verbindungsmittel, die einen unterschiedlichen Hub der beiden Türflügelsegmente in Fahrzeugquerrichtung und weiterhin ein Verschwenken von zumindest einem der beiden Türflügelsegmente um dessen Hochachse bzw. eine Schrägstellung zur Fahrzeugaußenwand erlauben. Vorzugsweise ist es möglich, dass sich das untere Türflügelsegment um seine Hochachse verschwenken lässt, während das obere Türflügelsegment, welches den größeren Hub zur Fahrzeugseitenwand aufweist, nicht geschwenkt wird. Das obere Türflügelsegment bewegt sich also prinzipiell wie ein ungeteilter Türflügel nach dem Stand der Technik, das untere Türflügelsegment wird dagegen durch die erfindungsgemäße Verschwenkbarkeit und den geringeren Hub enger an der Fahrzeugaußenwand geführt. Als Verbindungselement kommt in einer besonders einfachen Ausführungsvariante beispielsweise eine Art Stoffmaterial infrage, dass zwischen den beiden Türflügelsegmente angeordnet ist. Alternativ kann auch ein elastisches gummiartiges Material verwendet werden.

Eine besonders vorteilhafte Ausführungsvariante nutzt als Verbindungsmittel zumindest zwei, vorzugsweise mehrere Verbindungshebel, die die beiden Türflügelsegmente miteinander verbinden. Die Verbindungshebel können ebenfalls elastisch ausgeführt sein, also eine Längenänderung, eine Kippbewegung und eine Torsion zulassen, um die gewünschten Bewegungen der beiden Türflügelsegmente zueinander zu erlauben. Alternativ können sie aus einem unelastischen Material, beispielsweise aus Stahl oder einem festen Kunststoff gefertigt sein, solange sie durch entsprechende Vorrichtungen oder Elemente die notwendigen Freiheitsgrade zulassen.

Um eine möglichst zuverlässige Bewegung der beiden Türflügelsegmente zueinander zu gewährleisten, haben sich Verbindungsmittel oder -hebel als besonders vorteilhaft erwiesen, die in Fahrzeugquerrichtung entsprechend einem Parallelogramm bewegbar sind. Die einander zugewandten Seitenkanten der beiden Türflügelsegmente werden durch die Parallelogrammführung über eine Doppel-Arm Führung während des Schwenkens, im ursprünglichen Winkel in der Ebene senkrecht zur Drehachse zueinander bewegt.

Um eine besonders stabile Verbindung zwischen den beiden Türflügelsegmenten zu gewährleisten, sind vorzugsweise mehrere Verbindungshebel entlang der Trennung der beiden Türflügelsegmente vorgesehen. Die Verbindunghebel sind zur Ausbildung der Parallelogrammführung entsprechend an verschiedenen in Fahrzeugquerrichtung versetzt zueinander angeordneten Anschlagpunkten an den Seitenkanten drehbar gelagert.

Vorzugsweise können die Verbindungshebel an einem der freien Enden gekröpft bzw. abgewinkelt ausgeführt sein, um dadurch die Bauhöhe in Fahrzeugquerrichtung zusätzlich zu reduzieren. Die Verbindungshebel werden dabei entlang der Seitenkanten der beiden Türflügelsegmente im Wechsel ausgerichtet, also mit dem gekröpften freien Ende einmal nach oben, dann nach unten usw., wobei ein Verbindungshebel jeweils entweder an den beiden in Bewegungsrichtung des Hubs vorderen oder hinteren Anlenkpunkten angelenkt ist. Die Abkröpfungen bewirken, dass die Hebel im Wesentlichen in einer Flucht nebeneinander angeordnet sind.

Es haben sich Verbindungshebel aus einem starrem Material als besonders geeignet erwiesen, die endseitig jeweils schwenkbar an den Türflügelsegmenten gelagert sind. Weiterhin bestehen sie aus zwei in Längsrichtung miteinander verbundenen Hebelteilen, wobei die beiden Hebelteile um ihre gemeinsame Längsachse um einen gewissen Bereich gegeneinander verdrehbar ausgeführt sind. Die Verbindung zwischen diesen kann vorzugsweise auch derart ausgeführt sein, dass eine Bewegung in Längsrichtung, also eine Längenveränderlichkeit des gesamten Verbindungshebels möglich ist.

Weiterhin ist vorzugsweise zumindest ein Federelement vorgesehen, das dasjenige Türflügelsegment in Richtung der Fahrzeugaußenwand treibt, welches den geringeren Hub aufweisen soll. Es können vorzugsweise zwei oder mehr Federelemente vorgesehen sein, je nach Konstruktion kann auch ein einziges Federelement ausreichen. Wesentlich ist, dass das oder die Federelemente den unterschiedlichen Hub unterstützen.

Beispielsweise wird das obere Türflügelsegment durch die zugehörige Steuerung und Führung, vorzugsweise durch einen oder mehrere Hebelarme, starr und wie üblich bewegt, während das untere Türflügelsegment über die Federelemente, die sich an dem oberen Türflügelsegment abstützen, in Richtung der Fahrzeugaußenwand gedrückt wird. Die Federelemente treiben die beiden Türflügelsegmente auseinander und bewirken dadurch den unterschiedlichen Hub. Während der Bewegung in die Geschlossenstellung bewegt sich das über Federelemente bewegbare Türflügelsegment, also das vorzugsweise untere Türflügelsegment zurück in die gleiche Ebene wie das andere Türflügelsegment, wobei die Federkraft der Federelemente überwunden wird. In der Geschlossenstellung fluchten die beiden Türflügelsegmente wieder, sie liegen mit ihren einander zugewandten Seitenkanten aneinander an. Als Federelemente kommen beispielsweise Druckfedern infrage, je nach Konstruktion können es aber auch Blatt- oder Zugfedern sein.

In einer vorteilhaften Ausführungsvariante sind an dem starren, vorzugsweise dem oberen Türflügelsegment abstehende Bolzen angeordnet, die sich durch Öffnungen im anderen Türflügelsegment hindurch erstrecken. An ihren freien Enden weisen die Bolzen Bolzenköpfe auf, deren Durchmesser den Durchmesser der Öffnung übersteigt. Das bewegbare Türflügelsegment kann sich somit entlang der Bolzen bewegen, wobei der Hub durch den Bolzenkopf, der am Ende der Bewegung an dem Türflügelsegment zur Anlage kommt, begrenzt wird. Es hat sich gezeigt, dass vorzugsweise jedem Verbindungshebel ein Bolzen und eine Öffnung zugeordnet sind, um eine maximale Führung und Widerstandsfähigkeit zu erreichen. In einer besonders vorteilhaften Ausführungsvariante sind die für den Hub zuständigen oder den Hub unterstützenden Federelemente als Druckfedern ausgeführt, die die Bolzen zumindest abschnittsweise umgeben.

Der maximale Hub kann durch zusätzliche Mittel, beispielsweise Abstützstangen, die im Seitenbereich der beiden Türflügelsegmente angeordnet sind und diese verbinden, zusätzlich begrenzt werden.

In einer besonders vorteilhaften Ausführungsvariante schwenken die beiden Türflügelsegmente während der Öffnungs- oder Schließbewegung nicht um einen einzigen Schwenk- oder Drehpunkt, vielmehr kann sich die Position des Schwenk- oder Drehpunkts aufgrund der relativen Bewegung der beiden Türflügelsegmente zueinander in Fahrzeugquerrichtung und in Abhängigkeit des unterschiedlichen Hubs der beiden Türflügelsegmente ändern. Zumindest eines der Türflügelsegmente kann in jeder Position entlang der Fahrzeugquerrichtung gegenüber dem anderen Türflügelsegment verschwenkt werden.

Die erfindungsgemäße Fahrzeugtürvorrichtung eignet sich insbesondere für einen Einsatz in Hochgeschwindigkeitszügen, da die Türflügel trotz der Teilbarkeit die Türöffnung in der Geschlossenstellung stabil und zuverlässig schließen. Die Anordnung mehrerer Verbindungshebel bewirkt eine feste Verbindung zwischen den beiden Türflügelsegmenten. Auch wenn die Erfindung in Bezug auf einen seitlich am Fahrzeug angeordneten Türflügel erläutert wird, ist sie auch an Front- oder Heckseiten eines Fahrzeugs einsetzbar.

Eine besonders vorteilhafte Ausführungsvariante der Erfindung ist in den nachfolgenden Figuren gezeigt. Die darin gezeigten technischen Merkmale müssen dabei nicht gemeinsam verwirklicht werden, wesentlich ist der grundsätzliche Aufbau der Fahrzeugtürvorrichtung. Es zeigen:
- Figur 1:: eine übliche Fahrzeugtürvorrichtung nach dem Stand der Technik,
- Figur 2:: einen erfindungsgemäßen Türflügel mit zwei Türflügelsegmenten,
- Figur 3:: den erfindungsgemäßen Türflügel aus Fig. 2 in zwei Stellungen,
- Figur 4:: eine erste Ausführungsvariante des erfindungsgemäßen Türflügels im Schnitt in Geschlossenstellung,
- Figur 5:: eine erste Ausführungsvariante des erfindungsgemäßen Türflügels im Schnitt in Offenstellung,
- Figur 6:: eine Detailansicht der Offenstellung im Schnitt,
- Figur 7:: eine Ansicht des Türflügels von innen,
- Figur 8:: Detailansicht einer gelenkigen Verbindung der beiden Türflügelsegmente,
- Figur 9:: eine Ansicht des Türflügels im Türrahmen von innen,
- Figur 10:: eine Ansicht einer zweiten erfindungsgemäßen Variante von innen in Geschlossenstellung,
- Figur 11:: eine Ansicht der zweiten erfindungsgemäßen Variante von innen in Schrägstellung,
- Figur 12:: eine Ansicht der zweiten erfindungsgemäßen Variante von innen in Offenstellung,
- Figur 13:: eine perspektivische Ansicht der zweiten erfindungsgemäßen Variante von außen in Geschlossenstellung,
- Figur 14:: eine perspektivische Ansicht der zweiten erfindungsgemäßen Variante von außen in Schrägstellung,
- Figur 15:: eine perspektivische Ansicht der zweiten erfindungsgemäßen Variante von außen in Offenstellung,
- Figur 16:: eine Schnittdarstellung der zweiten erfindungsgemäßen Variante in Geschlossenstellung,
- Figur 17:: eine Schnittdarstellung der zweiten erfindungsgemäßen Variante in Schrägstellung,
- Figur 18:: eine Schnittdarstellung der zweiten erfindungsgemäßen Variante in Offenstellung,
- Figur 19:: eine Schnittdarstellung der Position eines Federelementes,
- Figur 20:: ein erfindungsgemäßes Verbindungsmittel in Seitenansicht,
- Figur 21:: ein erfindungsgemäßes Verbindungsmittel in Schnittdarstellung,
- Figur 22:: einen Vergleich zweier Anordnungen des Verbindungsmittels.

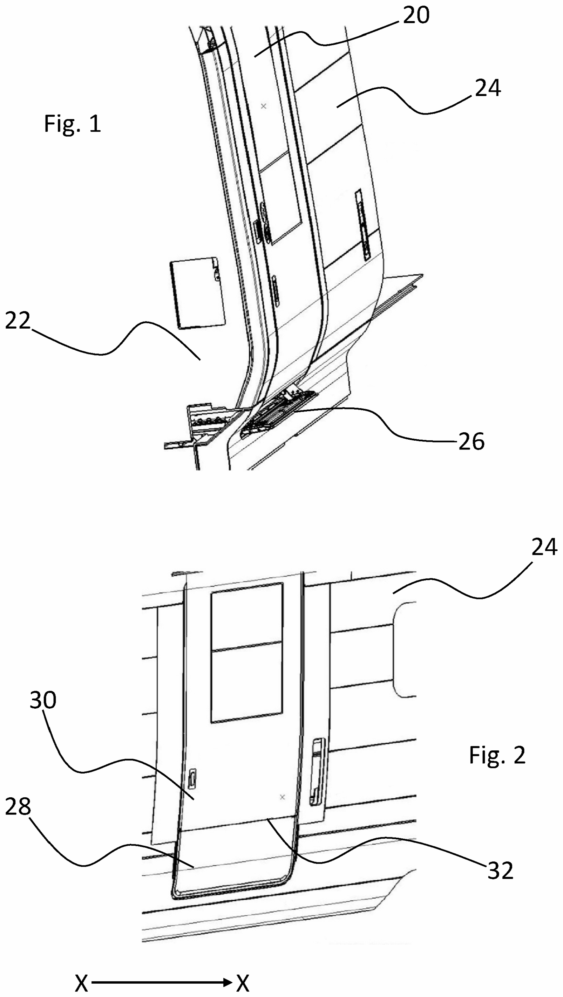

Figur 1 zeigt eine Tür aus dem Stand der Technik. Die Tür ist in einem Fahrzeug 20 angeordnet, das eine Fahrzeugaußenwand 24 aufweist. Die Tür ist durch einen einzigen durchgängigen Türflügel 22 gebildet, der sich in der gezeigten Darstellung in der geschlossenen Position befindet. Der Türflügel 22 ist aus der Türöffnung ausfahrbar und parallel zur Fahrzeugaußenwand 24 verfahrbar. In der Offenstellung steht er dann gegenüber der Fahrzeugaußenwand 24 seitlich vor. Unterhalb der Tür ist eine Druckklappe 26 angeordnet, die beim Öffnen über den Wagenkasten bzw. über die Fahrzeugaußenwand hinausragt.

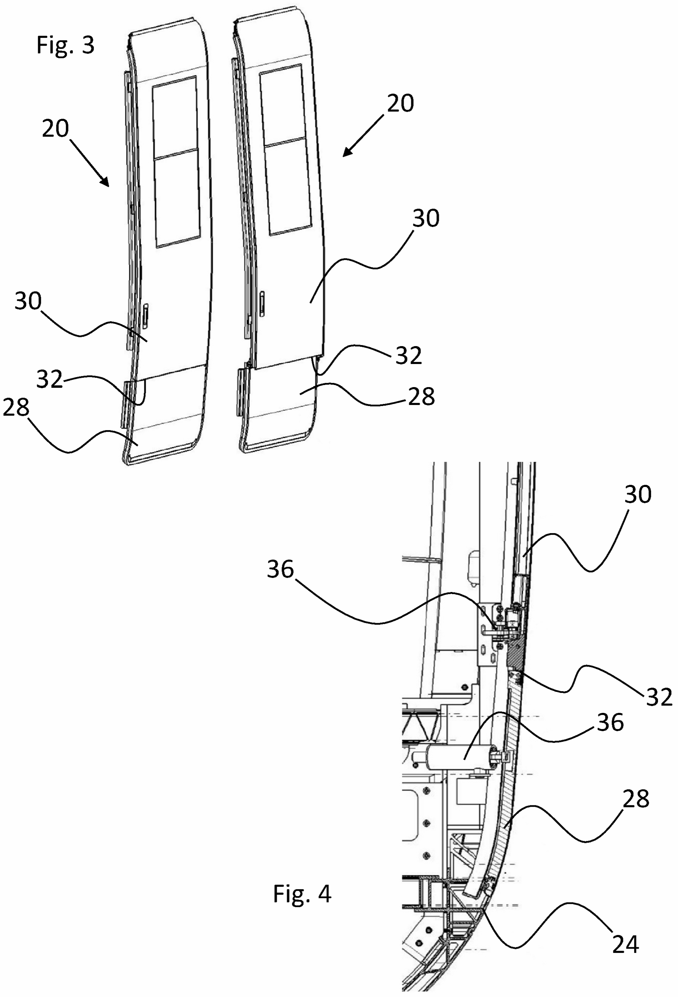

Die Figuren 2 und 3 zeigen einen erfindungsgemäßen Türflügel 22 bestehend aus einem unteren Türflügelsegment 28 und einem oberen Türflügelsegment 30. Die beiden Türflügelsegmente 28, 30 sind entlang einer Trennebene 32, die horizontal entlang der Fahrzeugaußenwand 24 verläuft, getrennt. Figur 3 verdeutlicht den wesentlichen Effekt der Erfindung, nämlich dass die beiden Türflügelsegmente 28, 30 quer zur Verfahrrichtung des Türflügels 22 unterschiedlich zueinander positioniert sind. Sie sind in der Offenstellung (rechte Figur) in Bezug auf ihre Haupterstreckungsflächen in der Fahrzeugquerrichtung versetzt zueinander angeordnet.

Das untere Türflügelsegment 28 verbleibt in der Offenstellung enger an der Fahrzeugaußenwand 24 als das obere Türflügelsegment 30.

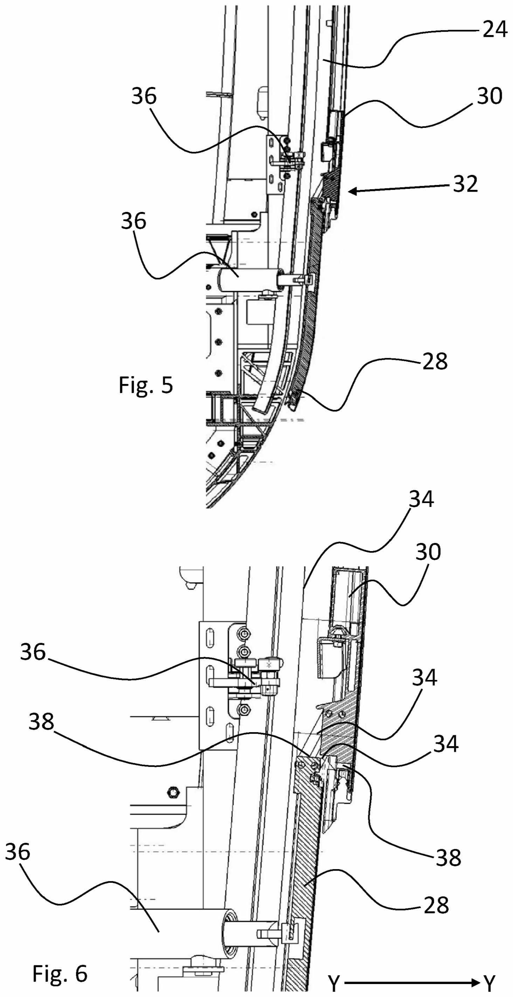

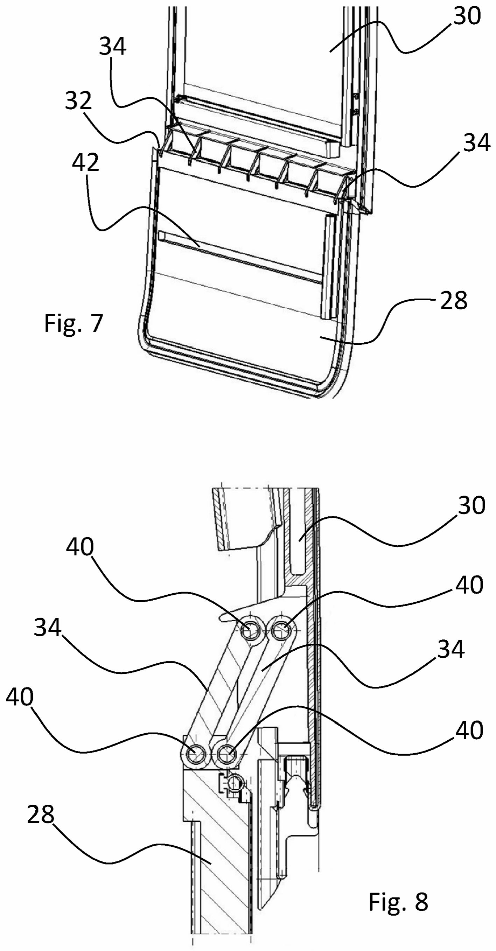

Die Figuren 4 bis 9 zeigen eine erste Ausführungsvariante der Erfindung, die Figuren 4 und 5 zeigen einen erfindungsgemäßen Türflügel 22 im Schnitt. In der Geschlossenstellung gemäß Figur 4 sind die beiden Türflügelsegmente 28, 30 fluchtend untereinander angeordnet, sie bilden eine durchgängige versatzfreie Außenfläche aus. In der Offenstellung ist das untere Türflügelsegment 28 dagegen enger an der Fahrzeugwand 24 angeordnet, als das obere Türflügelsegment 30. Die beiden Türflügelsegmente 28, 30 sind im gezeigten Ausführungsbeispiel über Verbindunghebel 34 miteinander verbunden. Der Antrieb der beiden Türflügelsegmente 28, 30 erfolgt über zwei Schwenkarme 36, von den jeder jeweils ein Türflügelsegment 28, 30 antreibt. Figur 6 zeigt den Bereich der Trennebene 32 in vergrößerter Darstellung. Erkennbar sind einander zugewandte Seitenkanten 38 der beiden Türflügelsegmente 28, 30, die in der Geschlossenstellung vorzugsweise dichtend aneinander anliegen. Weiterhin sind zwei Verbindunghebel 34 erkennbar, die in Fahrzeugquerrichtung Y - Y versetzt zueinander schwenkbar an den Seitenkanten 38 an Drehachsen 40 angeschlagen sind und somit eine Parallelogrammführung ausbilden. Dies ist insbesondere auch in Figur 8 deutlich erkennbar. Weiterhin ist eine Führungsschiene 42 gezeigt, über die das untere Türflügelsegment 28 entlang der Fahrzeugaußenwand 24 geführt ist.

Aus Figur 7, die die Türflügelsegmente 28, 30 von innen zeigt geht hervor, dass die beiden Türflügelsegmente 28, 30 über mehrere Verbindunghebel 34, die entlang der Seitenkante 38 angeordnet sind, miteinander verbunden sind.

Figur 8 zeigt, dass bei dieser Ausführungsvariante der obere Schwenkarm 36 im Wesentlichen die Schwenkbewegung der beiden Türflügel 22 bewirkt, während der untere Schwenkarm 36 in erster Linie das untere Türflügelsegment 28 nah an der Fahrzeugaußenwand 24 hält.

In den Figuren ist erkennbar, dass das obere Türflügelsegment 30 wesentlich weiter in das Lichtraumprofil des Wagenkastens ragt als das untere Türflügelsegment 28.

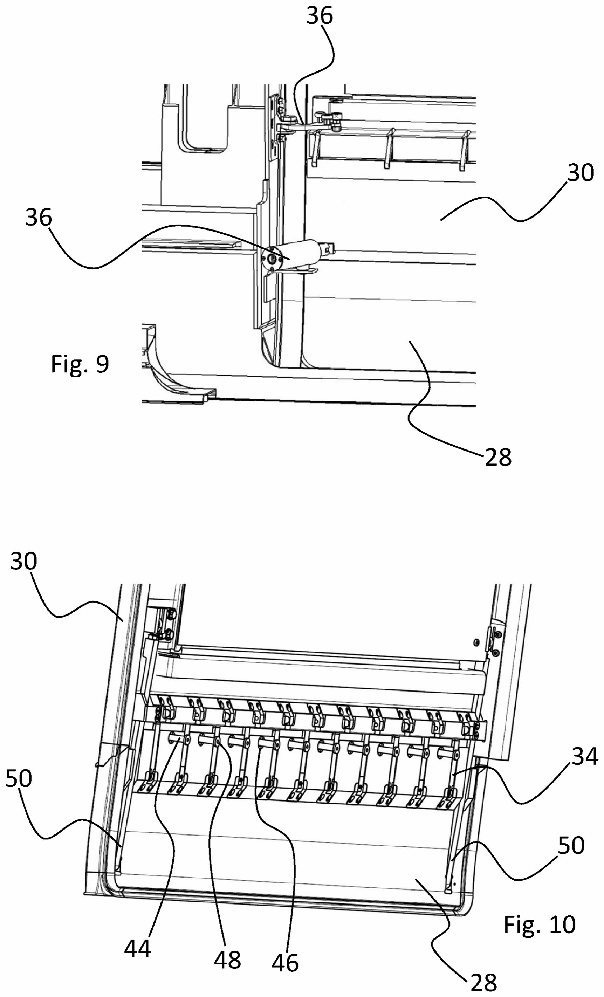

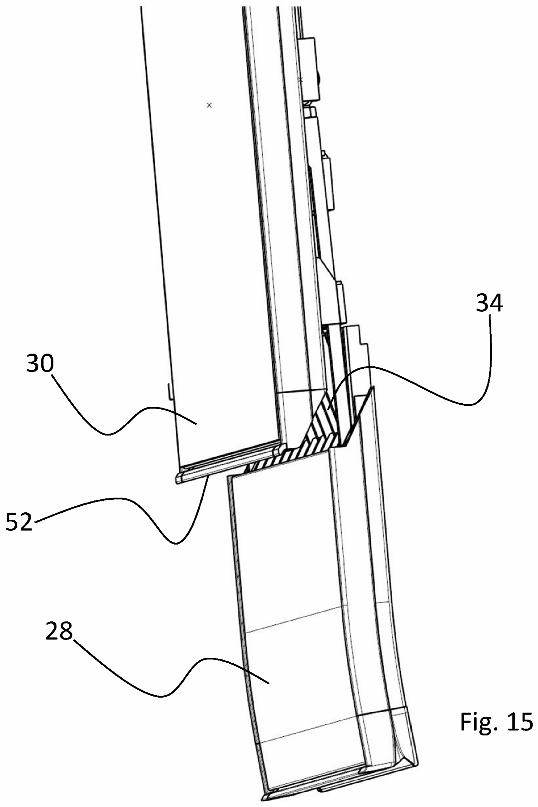

Die Figuren 10 bis 22 zeigen eine zweite Ausführungsvariante der Erfindung. Das Grundprinzip der beiden Ausführungsvarianten ist sehr ähnlich, sie unterscheiden sich im Wesentlichen durch die Verbindung der beiden Türflügelsegmente 28, 30 bzw. die Ausbildung der Verbindungshebel 34.

Die Figuren 10 bis 12 zeigen insbesondere das untere Türflügelsegment 28 von innen. Erkennbar sind nicht nur die Verbindunghebel 34, sondern auch nebeneinander und parallel zu den Seitenkanten 38 angeordnete Bolzen 44. Die Bolzen 44 sind durch Öffnungen 46 des unteren Türflügelsegments 28 geführt und weisen an ihren freien Enden Bolzenköpfe 48 auf, deren Durchmesser den Durchmesser der Öffnungen 46 übersteigt. Die Bolzen 44 führen das untere Türflügelsegment 28 in Fahrzeugquerrichtung Y - Y, begrenzen aber auch den maximalen Hub durch den Anschlag der Bolzenköpfe 48 am unteren Türflügelsegment 28.

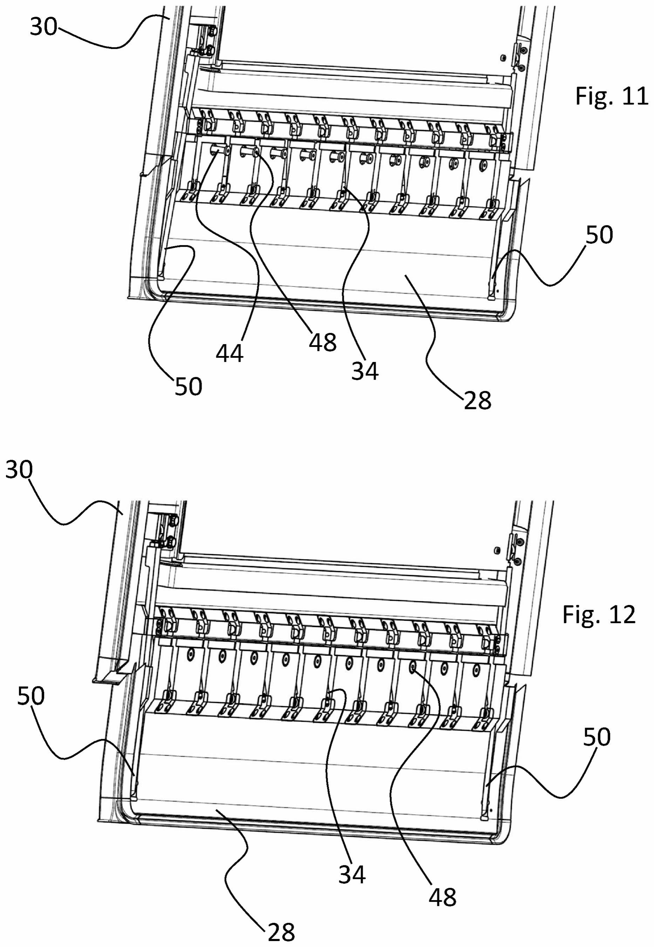

Die erfindungsgemäße Ausbildung der Verbindungselemente 34 erlaubt eine Schrägstellung des unteren Türflügelsegments 28 gegenüber dem oberen Türflügelsegment 30. Dies verdeutlicht insbesondere Figur 11, in der der unterschiedliche Hub entlang der Seitenkante 38 anhand der mehr oder weniger sichtbaren Bolzen 44 erkennbar ist. In Figur 10 sind alle Bolzen 44 vollständig durch die Öffnungen 46 geführt, in der Offenstellung gemäß Figur 12 befinden sich alle Bolzenköpfe 48 am Anschlag am unteren Türflügelsegment 28.

Erkennbar sind weiterhin Abstützstangen 50, die sich rechts und links neben den Verbindungshebeln 34 befinden und die beiden Türflügelsegmente 28, 30 ebenfalls miteinander verbinden. Die Abstützstangen 50 dienen der Erhöhung der Stabilität und der Begrenzung des Hubs des unteren Türflügelsegment 28.

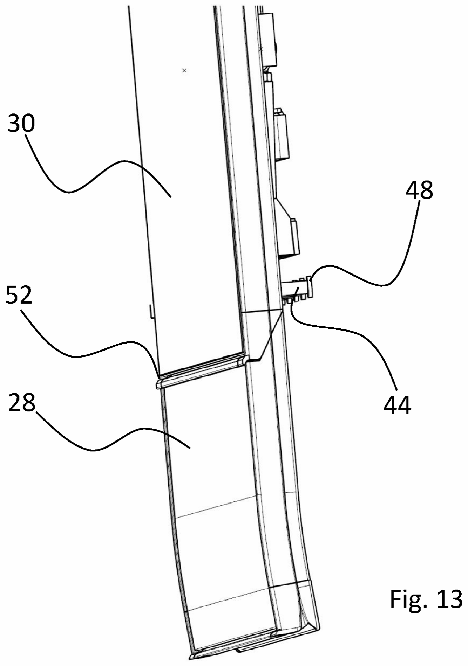

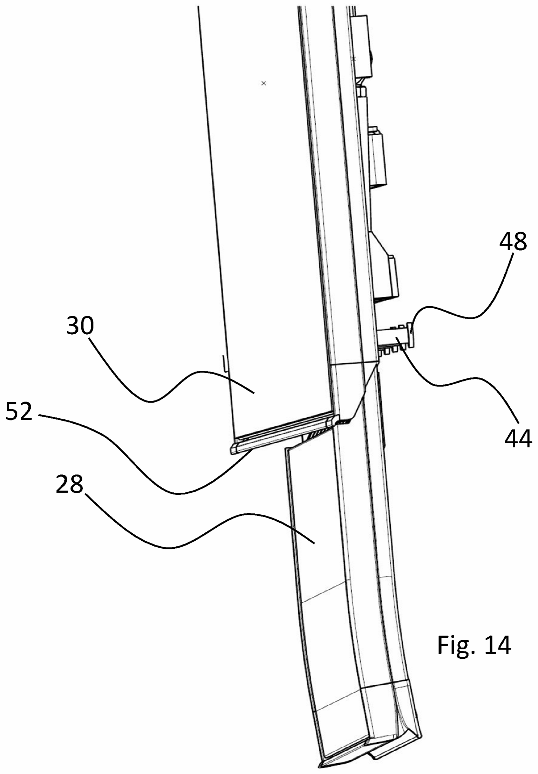

Die Figuren 13 bis15 zeigen die beiden Türflügelsegmente 28, 30 in perspektivischer Darstellung und verdeutlichen ebenfalls die Bewegung des unteren Türflügelsegments 28 gegenüber dem oberen Türflügelsegment 30. Die Schrägstellung ist in Figur 14 verdeutlicht. Die mögliche Schrägstellung ist deshalb wichtig, weil nur dadurch auch während der Schwenkbewegung ein möglichst geringer Abstand des unteren Türflügelsegments 28 von der Fahrzeugaußenwand 24 gewährleistet werden kann. Andernfalls stünde die in Öffnungsrichtung des Türflügels 22 vordere Schließkante des unteren Türflügelsegments 28 genauso weit wie die des oberen Türflügelsegments 30 über die Außenhülle des Fahrzeugs vor.

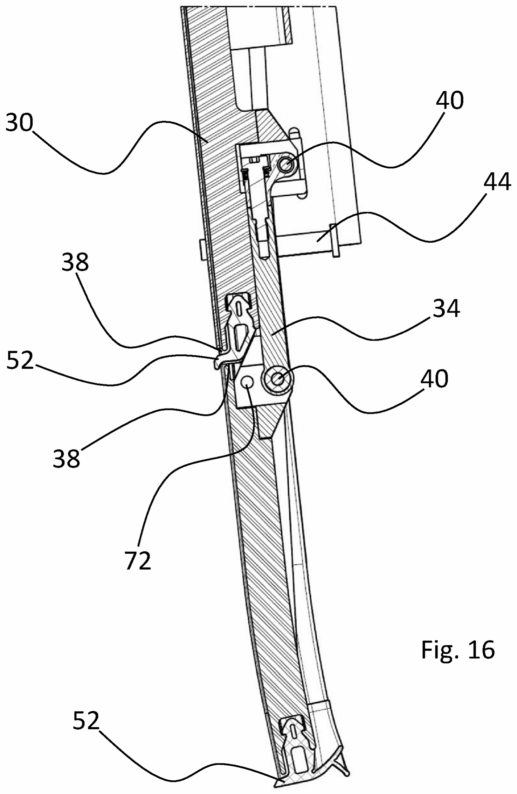

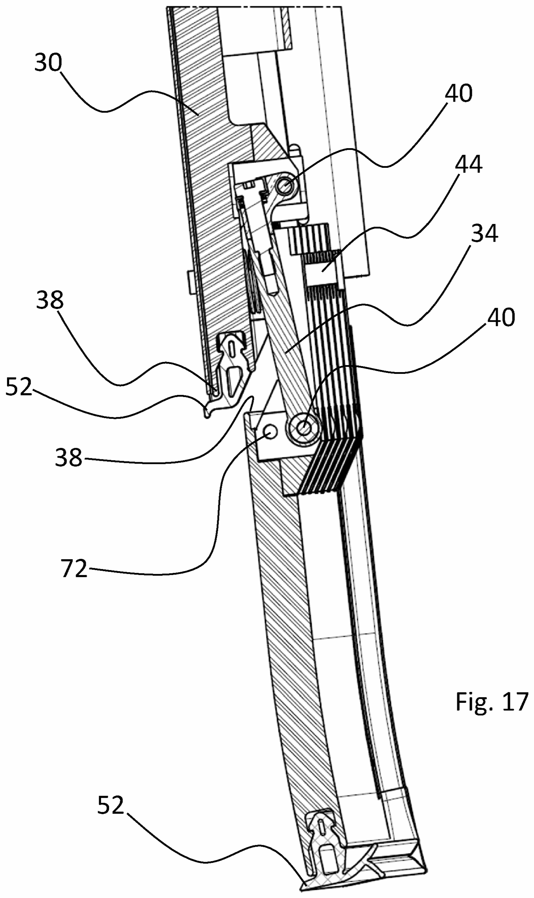

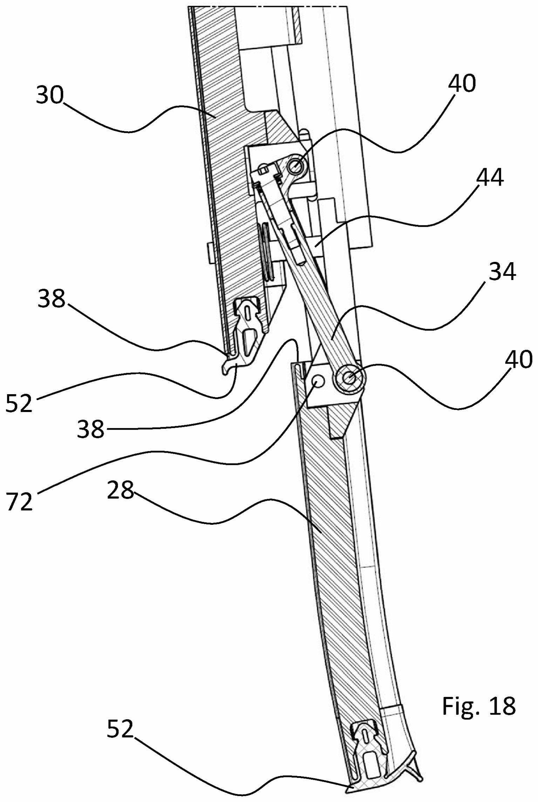

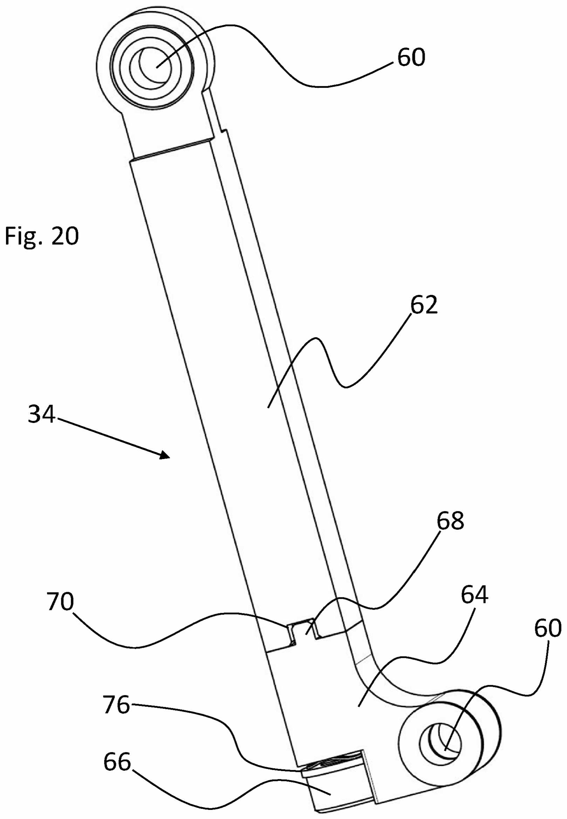

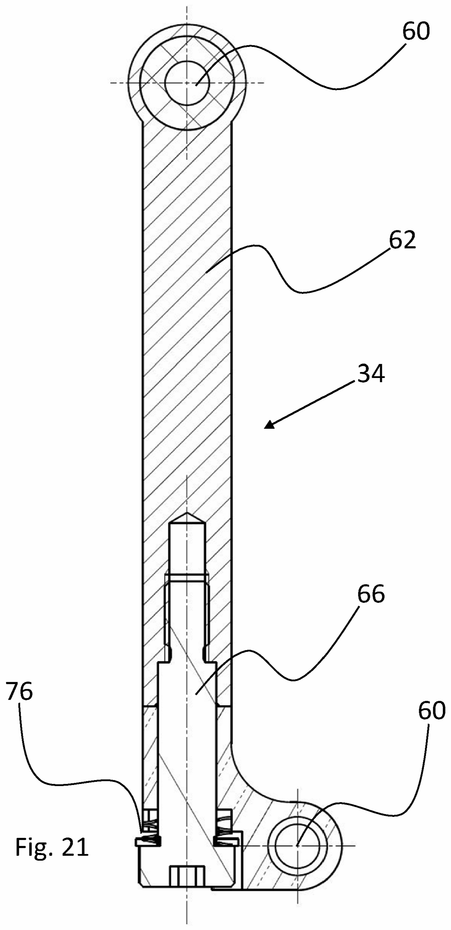

Die Figuren 16 bis 18 zeigen die Türflügelsegmente 28, 30 im Bereich der Trennebene 32 im Schnitt. Die Schnittlinie verläuft durch einen der Verbindungshebel 34, der auch den Figuren 20 und 21 gezeigt ist. Deutlich erkennbar ist ein zwischen den beiden Türsegmenten 28, 30 angeordnetes Dichtelement 52, das die beiden Seitenkanten 38 gegeneinander abdichtet. Ein weiteres Dichtelement 52 ist an der dem oberen Türflügelsegment 30 abgewandten, also einem Untergrund zugewandten Seitenkante des unteren Türflügelsegments 28 angeordnet. Figur 16 zeigt die Geschlossenstellung, Figur 17 eine Zwischenstellung und Figur 18 die Offenstellung des Türflügels 22.

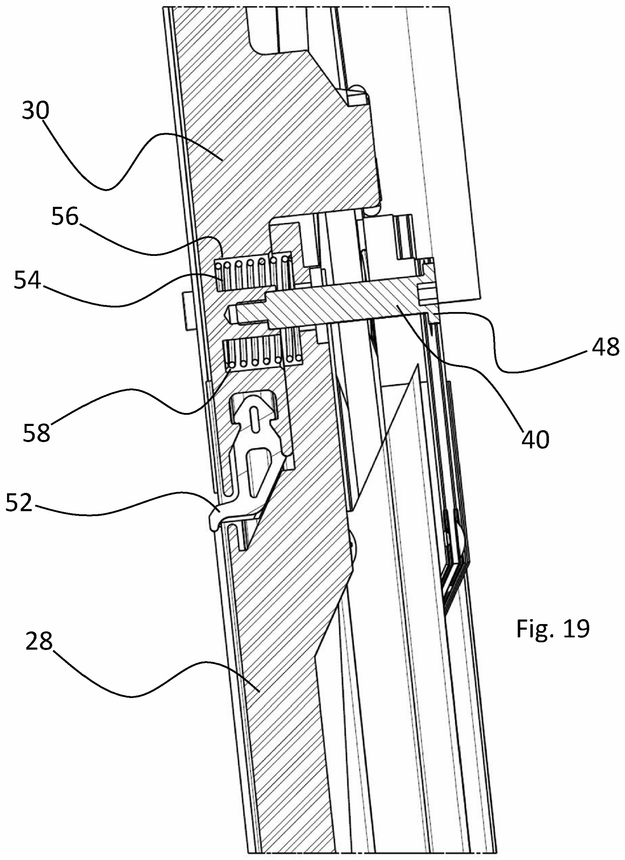

Figur 19 verdeutlicht ein Federelement 54, dass zwischen dem unteren Türflügelsegment 28 und dem oberen Türflügelsegment 30 angeordnet ist und die beiden Türflügelsegmente 28, 30 auseinander treibt. Das Federelement 54 ist im Bereich des Bolzens 44 angeordnet, der Bolzen 44 erstreckt sich bereichsweise in das Federelement 54 hinein. Im gezeigten Ausführungsbeispiel ist im Bereich des oberen Türflügelsegments 30 eine ringförmige Ausnehmung 56 für die Aufnahme des Federelements 54 geschaffen, in die sich das Federelement 54 bereichsweise hineinerstreckt und in der es sich an einem Ausnehmungsboden 58 abstützt.

Die Figuren 20 bis 22 verdeutlichen den Aufbau und die Anordnung der Verbindungshebel 34, die aus einem nichtelastischen Material, beispielsweise Stahl, Aluminium oder einem starren Kunststoff gefertigt sind. Aus den Figuren 20 und 21 ergibt sich, dass die Verbindungshebel 34 an beiden freien Enden Schwenköffnungen 60 aufweisen, durch die sich im montierten Zustand die Drehachsen 40 der beiden Türflügelsegmente 28, 30 hindurch erstrecken. Die Schwenköffnungen 60 sind derart ausgeführt, dass nicht nur eine Schwenkbewegung um die Drehachse 40, sondern auch eine Schwenk- oder Kippbewegung quer zur Drehachse 40 möglich ist. Grundsätzlich können beide Schwenköffnungen 60 eine solche Querbewegung zulassen, je nach gewünschtem Freiheitsgrad reicht aber auch eine entsprechende Ausgestaltung nur einer der beiden Schwenköffnung 60 eines Verbindungshebels 34 aus.

Ein Verbindungshebel 34 besteht weiterhin aus zwei in Längsrichtung miteinander verbundenen Hebelteilen, einem ersten Hebelteil 62 und einem zweiten Hebelteil 64, die über eine sich im Innern entlang der gemeinsamen Längsachse erstreckende Schraube 66 miteinander verbunden sind. Die beiden Hebelteile 62, 64 sind um ihre gemeinsame Längsachse um einige Grad gegeneinander verdrehbar, wobei die Verdrehbarkeit durch eine an den aneinander anliegenden freien Enden der beiden Hebelteile 62, 64 vorgesehene Steckverbindung begrenzt ist. Die Steckverbindung weist am zweiten Hebelteil 64 einen quaderförmigen Steg 68 auf, der sich in eine entsprechend quaderförmig ausgebildete Nut 70 am ersten Hebelteil 62 hinein erstreckt. Die Breite der Nut 70 übersteigt die Breite des Stegs 68, wodurch eine Verdrehbarkeit bis zum Anschlag des Stegs 68 an den Seitenflanken der Nut 70 gewährleistet ist. In der dargestellten Ausführungsvariante des Verbindunghebels 34 sind die beiden Hebelteile 62, 64 auch in Längsrichtung relativ zueinander bewegbar. Die beiden Hebelteile 62, 64 können also auseinandergezogen werden, wobei die Rückstellung und auch die Bewegungsbegrenzung über die Schraube 66 und ein zwischen einem Schraubenkopf 74 und dem zweiten Hebelteil 64 angeordnetes zweites Federelement 76 gewährleistet ist. Das zweite Hebelteil 64 kann also entlang der Schraube 66 gegen den Schraubenkopf 74 bewegt werden und wird durch das zweite Federelement 76 zurückgedrückt.

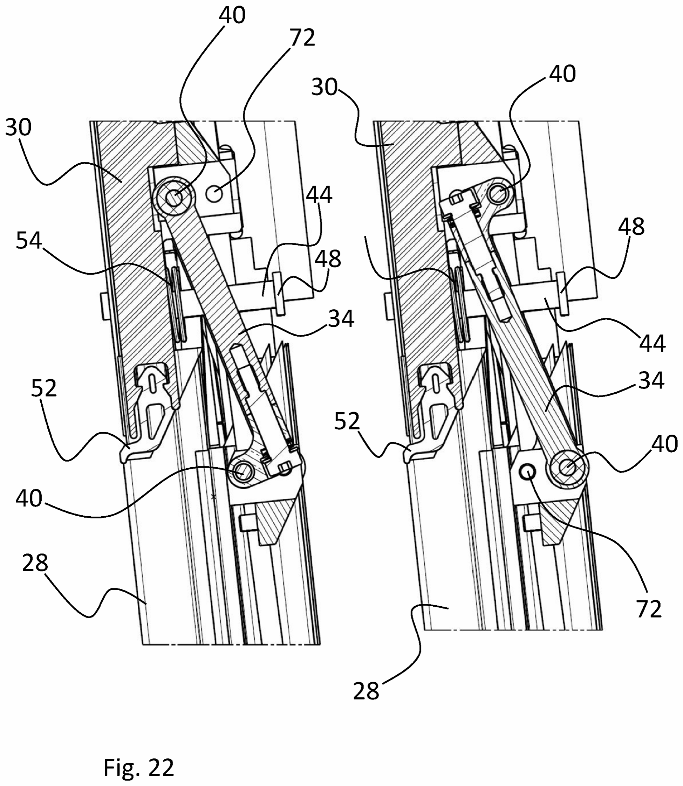

Im gezeigten Ausführungsbeispiel ist das zweite Hebelteil 64 an seinem freien Ende gekröpft, also abgewinkelt ausgeführt, wodurch die Bauhöhe in Querrichtung Y - Y reduzierbar ist. Dazu sind die Verbindungshebel 34 entlang der Seitenkanten 38 im Wechsel ausgerichtet, also mit dem gekröpften freien Ende einmal nach oben, dann nach unten usw. Um dies zu ermöglichen, weisen die beiden Türflügelsegmente 28, 30 an ihren Seitenkanten 38 nebeneinander angeordnete Löcher 72 auf, in die die Drehachsen 40 nach Bedarf einsetzbar sind. Figur 22 verdeutlicht, dass dabei die Verbindungshebel 34 entweder an den beiden in Hubrichtung vorderen oder an den beiden in Hubrichtung hinteren Löchern 72 angeschlagen sind. Die Abkröpfungen bewirken, dass die Verbindungshebel 34 entlang der Seitenkanten 38 in einer Flucht hintereinander angeordnet sind, aber trotzdem die Parallelogrammführung ermöglichen.

### Bezugszeichen

- 20: Fahrzeug
- 22: Türflügel
- 24: Fahrzeugaußenwand
- 26: Druckklappe
- 28: unteres Türflügelsegment
- 30: oberes Türflügelsegment
- 32: Trennebene
- 34: Verbindungshebel
- 36: Schwenkarme
- 38: Seitenkanten
- 40: Drehachse
- 42: Führungsschiene
- 44: Bolzen
- 46: Öffnungen
- 48: Bolzenköpfe
- 50: Abstützstangen
- 52: Dichtelement
- 54: Federelement
- 56: Ausnehmung
- 58: Ausnehmungsbolzen
- 60: Schwenköffnung
- 62: erstes Hebelteil
- 64: zweites Hebelteil
- 66: Schraube
- 68: Steg
- 70: Nut
- 72: Loch
- 74: Schraubenkopf
- 76: zweites Federelement

## Patentansprüche

1. Fahrzeugtürvorrichtung mit einem Türflügel (22) zum Verschließen einer Türöffnung eines Fahrzeugs (20), wobei der Türflügel (22) aus einem oberen Türflügelsegment (30) und einem unteren Türflügelsegment (28) gebildet ist, die
- in einer Geschlossenstellung die Türöffnung gemeinsam verschließen,
- in einer Offenstellung in einer Fahrzeuglängsrichtung parallel neben der Türöffnung und in einer Fahrzeugquerrichtung beabstandet zu einer Fahrzeugaußenwand (24) angeordnet sind,
- in der Offenstellung in Bezug auf ihre Haupterstreckungsflächen in der Fahrzeugquerrichtung versetzt zueinander angeordnet sind,
**dadurch gekennzeichnet, dass** in der Offenstellung das untere Türflügelsegment (28) weniger von der Fahrzeugaußenwand (24) beabstandet ist als das obere Türflügelsegment (30).

2. Fahrzeugtürvorrichtung nach Anspruch 1, **dadurch gekennzeichnet, dass** das obere Türflügelsegment (30) über einen oberen Schwenkarm (36) und das untere Türflügelsegment (28) über einen unteren Schwenkarm (36) bewegt und gesteuert wird.

3. Fahrzeugtürvorrichtung nach Anspruch 1 oder Anspruch 2, **dadurch gekennzeichnet, dass** das obere Türflügelsegment (30) eine obere Führungsschiene (42) und das untere Türflügelsegment (28) eine untere Führungsschiene (42) aufweisen, entlang der die Türflügelsegmente während einer Verfahrbewegung parallel zur Fahrzeugaußenwand (24) geführt werden.

4. Fahrzeugtürvorrichtung nach einem der Ansprüche 1 bis 3, **dadurch gekennzeichnet, dass** die beiden Türflügelsegmente (28, 30) gelenkig miteinander verbunden sind.

5. Fahrzeugtürvorrichtung nach Anspruch 4, **dadurch gekennzeichnet, dass** die beiden Türflügelsegmente (28, 30) über ein Parallelogramm gelenkig miteinander verbunden sind.

6. Fahrzeugtürvorrichtung nach einem der Ansprüche 2 bis 5, **dadurch gekennzeichnet, dass** der untere Schwenkarm (36), der das untere Türflügelsegment (28) bewegt, die Hubbewegung des unteren Türflügelsegments (28) in Querrichtung des Fahrzeugs (20) bestimmt.

7. Fahrzeugtürvorrichtung nach Anspruch 6, **dadurch gekennzeichnet, dass** der untere Schwenkarm (36) derart ausgeführt und angeordnet ist, dass dieser die Hubbewegung des unteren Türflügelsegments (28) in Querrichtung des Fahrzeugs (20) unterschiedlich weit ausführen kann.

8. Fahrzeugtürvorrichtung nach Anspruch 7, **dadurch gekennzeichnet, dass** der untere Schwenkarm (36) einen Hubkolben ausweist, der die Hubbewegung des unteren Türflügelsegments (28) in Querrichtung des Fahrzeugs (20) bewirkt.

9. Fahrzeugtürvorrichtung nach einem der Ansprüche 1 bis 5, **dadurch gekennzeichnet, dass** zwischen den beiden Türflügelsegmenten (28, 30) ein Federelement (54) angeordnet ist, welches die Türflügelsegmente (28, 30) auseinandertreibt.

10. Fahrzeugtürvorrichtung nach einem der Ansprüche 1 bis 9, **dadurch gekennzeichnet, dass** die Türflügelsegmente (28, 30) über zumindest zwei Verbindungshebel (34) miteinander verbunden sind.

11. Fahrzeugtürvorrichtung nach Anspruch 10, **dadurch gekennzeichnet, dass** die Verbindungshebel (34) jeweils an einem freien Ende angewinkelt ausgeführt sind und entlang voneinander zugewandten Seitenkanten (38) der Türflügelsegmente (28, 30) angeordnet sind, wobei die Ausrichtung der gekröpften Enden der Verbindungshebel (34) entlang der Seitenkanten (38) im Wechsel erfolgt.

## Claims

1. A vehicle door device, comprising a door leaf (22) for closing a door opening of a vehicle (20), wherein the door leaf (22) is formed from an upper door leaf segment (30) and a lower door leaf segment (28), the two door leaf segments (28, 30)
- together close the door opening in a closed position,
- in an open position are arranged parallel to the door opening in the longitudinal direction of the vehicle and spaced apart from a vehicle outer wall (24) in the transverse direction of the vehicle,
- in the open position are offset from one another in the transverse direction of the vehicle with respect to their main extension surfaces,
**characterized in that** in the open position, the lower door leaf segment (28) is spaced less from the outer wall (24) of the vehicle than the upper door leaf segment (30).

2. The vehicle door device according to claim 1, **characterized in that** the upper door leaf segment (30) is moved and controlled via an upper pivot arm (36) and the lower door leaf segment (28) via a lower pivot arm (36).

3. The vehicle door device according to claim 1 or claim 2, **characterized in that** the upper door leaf segment (30) has an upper guide rail (42) and the lower door leaf segment (28) has a lower guide rail (42) along which the door leaf segments are guided during a movement parallel to the outer wall (24) of the vehicle.

4. The vehicle door device according to any one of claims 1 to 3, **characterized in that** the two door leaf segments (28, 30) are pivotally connected to one another.

5. The vehicle door device according to claim 4, **characterized in that** the two door leaf segments (28, 30) are pivotally connected to one another via a parallelogram.

6. The vehicle door device according to any one of claims 2 to 5, **characterized in that** the lower pivot arm (36), which moves the lower door leaf segment (28), determines the lifting movement of the lower door leaf segment (28) in the transverse direction of the vehicle (20).

7. The vehicle door device according to claim 6, **characterized in that** the lower pivot arm (36) is designed and arranged such that it can execute the lifting movement of the lower door leaf segment (28) in the transverse direction of the vehicle (20) to varying degrees.

8. The vehicle door device according to claim 7, **characterized in that** the lower pivot arm (36) has a piston that causes the lifting movement of the lower door leaf segment (28) in the transverse direction of the vehicle (20).

9. The vehicle door device according to any one of claims 1 to 5, **characterized in that** a spring element (54) is arranged between the two door leaf segments (28, 30), which drives the door leaf segments (28, 30) apart.

10. The vehicle door device according to any one of claims 1 to 9, **characterized in that** the door leaf segments (28, 30) are connected to one another via at least two connecting levers (34).

11. The vehicle door device according to claim 10, **characterized in that** the connecting levers (34) are each angled at a free end and are arranged along mutually facing side edges (38) of the door leaf segments (28, 30), wherein the alignment of the cranked ends of the connecting levers (34) along the side edges (38) is carried out alternately.

## Revendications

1. Dispositif de porte de véhicule comprenant un battant de porte (22) pour la fermeture d'une ouverture de porte d'un véhicule (20), le battant de porte (22) étant constitué d'un segment de battant de porte supérieur (30) et d'un segment de battant de porte inférieur (28), qui
- dans une position fermée ferment ensemble l'ouverture de porte,
- dans une position ouverte sont disposés, dans une direction longitudinale du véhicule, parallèles à côté de l'ouverture de porte et, dans une direction transversale du véhicule, espacés d'une paroi extérieure de véhicule (24),
- dans la position ouverte sont disposés décalés l'un de l'autre dans la direction transversale du véhicule en rapport avec leurs surfaces d'extension principale,
**caractérisé en ce que**, dans la position ouverte, le segment de battant de porte inférieur (28) est moins espacé de la paroi extérieure de véhicule (24) que le segment de battant de porte supérieur (30).

2. Dispositif de porte de véhicule selon la revendication 1, **caractérisé en ce que** le segment de battant de porte supérieur (30) est déplacé et commandé au moyen d'un bras pivotant supérieur (36) et le segment de battant de porte inférieur (28) au moyen d'un bras pivotant inférieur (36).

3. Dispositif de porte de véhicule selon la revendication 1 ou la revendication 2, **caractérisé en ce que** le segment de porte de véhicule supérieur (30) présente un rail de guidage supérieur (42) et le segment de porte de véhicule inférieur (28) présente un rail de guidage inférieur (42), le long desquels les segments de porte de véhicule sont guidés parallèlement à la paroi extérieure de véhicule (24) pendant un mouvement de déplacement.

4. Dispositif de porte de véhicule selon l'une quelconque des revendications 1 à 3, **caractérisé en ce que** les deux segments de battant de porte (28, 30) sont reliés entre eux de manière articulée.

5. Dispositif de porte de véhicule selon la revendication 4, **caractérisé en ce que** les deux segments de battant de porte (28, 30) sont reliés entre eux de manière articulée au moyen d'un parallélogramme.

6. Dispositif de porte de véhicule selon l'une quelconque des revendications 2 à 5, **caractérisé en ce que** le bras pivotant inférieur (36), qui déplace le segment de battant de porte inférieur (28), détermine le mouvement de levage du segment de battant de porte inférieur (28) dans la direction transversale du véhicule (20).

7. Dispositif de porte de véhicule selon la revendication 6, **caractérisé en ce que** le bras pivotant inférieur (36) est réalisé et disposé de telle sorte que celui-ci peut effectuer le mouvement de levage du segment de battant de porte inférieur (28) dans la direction transversale du véhicule (20) à des ampleurs différentes.

8. Dispositif de porte de véhicule selon la revendication 7, **caractérisé en ce que** le bras pivotant inférieur (36) présente un piston élévateur, qui provoque le mouvement de levage du segment de battant de porte inférieur (28) dans la direction transversale du véhicule (20).

9. Dispositif de porte de véhicule selon l'une quelconque des revendications 1 à 5, **caractérisé en ce qu'**un élément de ressort (54) est disposé entre les deux segments de battant de porte (28, 30), lequel écarte les segments de battant de porte (28, 30).

10. Dispositif de porte de véhicule selon l'une quelconque des revendications 1 à 9, **caractérisé en ce que** les segments de battant de porte (28, 30) sont reliés entre eux au moyen d'au moins deux leviers de liaison (34).

11. Dispositif de porte de véhicule selon la revendication 10, **caractérisé en ce que** les leviers de liaison (34) sont réalisés respectivement coudés à une extrémité libre et sont disposés le long de bords latéraux (38) se faisant face des segments de battant de porte (28, 30), l'orientation des extrémités coudées des leviers de liaison (34) s'effectuant en alternance le long des bords latéraux (38).
